# EUROPEAN PATENT SPECIFICATION

(11) **EP 3 838 822 B1**
(45) Date of publication and mention of the grant of the patent: **07.06.2023**
(21) Application number: 20214076.0
(22) Date of filing: 15.12.2020
(51) Int. Cl.: B65H 49/08, B65H 55/04, B65H 57/12, B65D 85/04, G02B 6/44

(54) **COILED PRODUCT DISPENSING KIT**
AUSGABEVORRICHTUNG FÜR SPULENPRODUKT
KIT DE DISTRIBUTION DE PRODUITS ENROULÉS

(30) Priority: 17.12.2019 IT 201900024190
(43) Date of publication of application: 23.06.2021
(73) Proprietor: Prysmian S.p.A., 20126 Milano (IT)
(72) Inventor: LE DISSEZ, Arnaud, 20126 MILANO (IT); LAVENNE, Alain, 20126 MILANO (IT); FERRER, Jean Paul, 20126 MILANO (IT)
(74) Representative: Cevini, Gaia

(56) References cited:
- WO-A1-2015/161863
- US-A- 3 608 710
- US-A- 4 160 533
- US-A1- 2004 026 284

## Description

### Technical field

The present invention relates to the field of kits for dispensing a product in the form of a filament (such as a wire or a cable) from a coil thereof. Examples of such products are fiber optic cables, electric wires, electric cables or the like.

### Background art

In FTTH (Fiber To The Home) applications, a drop cable is usually wound onto a cardboard reel which is provided in a cardboard box. The cable can typically be unwound directly from an opening in the box. Typically, the cable is pre-terminated at an end thereof with a connector assembly that is stored at the center of the reel.

An example of this type of arrangement is disclosed in EP 2 264 502. In particular, EP 2 264 502 discloses a device having a connecting box for mechanically connecting optical fibers of user to optical fibers that are arranged in the box and obtained from a fiber supply cable. The fiber supply cable is connected to the connecting box and wound on a winding unit e.g. reel. The connecting box and the winding unit are arranged inside an envelope. The envelope is provided with an opening permitting unwinding of the fiber supply cable outside the envelope.

Other examples of boxes for dispensing a filamentary material are disclosed in the following documents.

US2007/0075171 discloses an adapter for inserting into a carton containing a non-reel coil of filamentary material or wire has a shaft-receiving sleeve supported by a box structure. The adapter's box structure has top and back walls joined at right angles and reinforced by side walls. Knobs extend outwardly from the side walls and have openings therethrough. Ribs on the underside of the top wall define a channel which is aligned with the openings in the knobs. The ribs, top wall and knobs define a sleeve which is oriented such that it may receive a shaft or rod of a wire pulling rack. Alternatively, said adapter having a box structure with walls only in two perpendicular planes. At least two of said walls forming a channel extending outwardly that may receive a shaft or rod.

US 2004/0026284 discloses a box for payout of a filamentary product such as cable or wire that is wound in a coil inside of the box. The box is constructed to retain the coil securely and utilize material in an efficient manner. Particularly, the box is adapted to retain a figure-eight coil of wire, which is often formed in an irregular shape. The box may include a payout tube that extends from a point outside of the box through a wall of the coil and into an interior point of the coil. The box serves to retain such a payout tube with an efficient amount of material and also provides for an improved method of assembling the box, the coil, and the payout tube. US 2004/0026284 discloses a coiled product dispensing kit according to the preamble of claim 1.

### Summary of the invention

The Applicant noticed that use of a reel to store a filamentary product, such as in EP 2 264 502, may create undesired frictions and twists. A figure-eight arrangement for the coiling of the cable may be adopted to reduce the twist, as in the box of US 2004/0026284, which does not comprise any reel. However, state-of-the-art arrangements still produce a sensible amount of waste materials. Moreover, the boxes of US2007/0075171 and US 2004/0026284 are not adapted to properly house a connector assembly attached at an end of the cable.

In view of the above, the Applicant has tackled the problem of providing a coiled product dispensing kit allowing to store and dispense a coil of a filamentary product having a connector assembly attached at an end thereof while reducing the amount of waste materials to be disposed after installation of the coiled product.

In one aspect, the present invention relates to a coiled product dispensing kit comprising:
- a coil of a filamentary product and a connector assembly attached to an end of the filamentary product,
- a support device for the coil and the connector assembly, the support device comprising:
   - a first wall and a second wall arranged in perpendicular planes and attached to each other to form a corner;
   - a compartment formed between the corner and a further wall attached to both the first wall and the second wall, the compartment being configured to house the connector assembly;
- a payout tube configured to pass a length of the filamentary product through it, the payout tube extending through an opening formed in the support device and having an entrance end for the filamentary product inside an area surrounded by the coil.

In an embodiment, the support device comprises one or more cardboard strips.

In another embodiment, the support device is made by a single cardboard strip.

In an embodiment, the support device comprises a cardboard strip folded to form the first wall and the second wall, and a further cardboard strip forming the further wall that is placed at the corner between the first wall and the second wall in an inclined position.

In an embodiment, the support device comprises a cardboard strip folded to form three adjacent straight walls arranged on perpendicular planes and two corners between the straight walls.

In an embodiment, the cardboard strip has a variable width, wherein the width is maximum at the opening and is minimum at an opposite position.

In an embodiment, the coiled product dispensing kit further comprises a heat-shrinkable thermo-plastic film covering the support device supporting the coil and the connector assembly, and the payout tube.

In an embodiment, the heat-shrinkable thermo-plastic film is made by a biopolymer or another biodegradable material.

In an embodiment, the payout tube is configured to be folded open lengthwise to release the length of the filamentary product

In an exemplary embodiment, the payout tube is a single piece of material comprising a weakened line along the length of the payout tube.

In a different exemplary embodiment, the payout tube is made of two or more detachable longitudinally extending portions.

In an embodiment, the payout tube is made of one of the following materials: cardboard, thermoformed polylactic acid, molded fiber, injection molded biopolymer.

### Brief description of the drawings

Further characteristics and advantages will become more apparent by reading the following detailed description of embodiments given as an example, with reference to the accompanying drawings, wherein:
- Figure 1 schematically shows a coiled product dispensing kit according to a first embodiment of the present invention;
- Figure 2 schematically shows a coiled product dispensing kit according to a second embodiment of the present invention;
- Figure 3 schematically shows a coiled product dispensing kit according to a third embodiment of the present invention;
- Figure 4 schematically shows a coiled product dispensing kit according to a fourth embodiment of the present invention;
- Figures 5a and 5b schematically show an exemplary payout tube for the coiled product dispensing kit of the present invention; and
- Figure 6 schematically shows two coiled product dispensing kits stacked one onto the other according to advantageous embodiments of the present invention.

### Detailed description of preferred embodiments of the invention

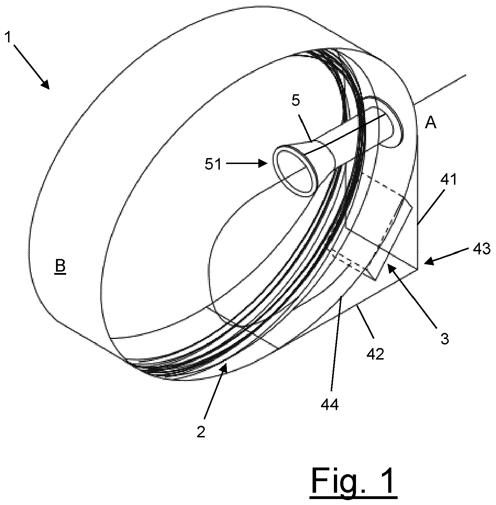

Figures 1-4 schematically show a coiled product dispensing kit 1 (also referred to simply as dispensing kit) according to different embodiments of the present invention.

In all the exemplary embodiments of the present invention, the coiled product dispensing kit 1 comprises a coiled product 2 in the form of a coil of a filamentary product such as an optic cable or an electric wire. An end of the filamentary product is attached to a connector assembly 3 such as a Compact Termination Box (CTB) for an optic cable, comprising, for instance, SC/APC (Subscriber Connector/Angle Polished Connector) connectors. The other end of the filamentary product is preferably drawn outside a support device of the dispensing kit, as it will be described herein after. The coil 2 of the filamentary product could be made in a figure-eight arrangement.

The dispensing kit 1 further comprises a support device 4 for supporting the coil 2 of filamentary product and the connector assembly 3. The support device 4 comprises at least a first wall 41 and a second wall 42 attached to each other to form a corner 43. Moreover, the support device 4 comprises a compartment formed between the corner 43 and a further wall 44 attached to both the first wall 41 and second wall 42, the compartment being configured to house the connector assembly 3, which is hence located outside the coil 2 of filamentary product.

The dispensing kit 1 shown in Figures 1-4 also comprises a payout tube 5 configured to pass a length of the filamentary product through it so that the filamentary product may be pulled out for dispensing. The payout tube 5 extends through an opening (not shown in the drawings) formed in one of the first wall 41 and the second wall 42 of the support device. Moreover, the payout tube 5 has an entrance end 51 for the filamentary product, which is located in an area surrounded by the coil 2, an exit end located outside the support device 4, and a central passage for the filamentary product.

The payout tube 5 is configured to be folded open lengthwise to provide access to its interior volume and release the length of the filamentary product housed therein. Once the payout tube 5 is folded open, also the connector assembly can be released from the support device, as it will be described herein below.

In particular, the payout tube has a closed ring cross-section configured to be opened at least at one position, where the tube's cross section may comprise a cut or a notch defining a thinning of the sidewall thickness. In the former case, the payout tube comprises at least one longitudinal cut that may be used to open the payout tube lengthwise. In the latter case, the thinning of the sidewall thickness defines, lengthwise, a weakened line that may be used to cut or tear the payout tube and fold it open.

More in particular, according to exemplary embodiments of the present invention, the payout tube 5 may be made by two or more detachable longitudinally extending portions. According to alternative exemplary embodiments of the present invention, the payout tube 5 can be made of a single piece of material and comprise, in its sidewall, at lest one weakened line extending along the length of the payout tube, which serves for cutting or tearing the payout tube 5 and folding it open.

It is particular advantageous that the payout tube 5 is made by a material chosen to be 100% recyclable. In particular, the material of the payout tube 5 meets the European Standard EN 13432:2000. This material may be one of the following: cardboard, thermoformed PLA (Polylactic Acid), molded fiber, injection molded biopolymer, or the like. The material of the payout tube may be the INZEA^{®} F38, F29HT10, or F2 HTS 451 thermoplastic material by Nurel Engineering Polymers, Nurel S.A. Zaragoza, Spain.

The dispensing kit 1 may comprise a covering (not shown in the drawings) enclosing the coil 2, the connector assembly 3, the support device 4 and the payout tube 5. The covering may be made of a heat-shrinkable thermoplastic film. According to advantageous embodiments, the film may be transparent. This allows to have an indication of the amount of filamentary material to be unwound. The heat-shrinkable film may be made of a biopolymer or another biodegradable material (in particular, it is made by a material meeting the European Standard EN 13432:2000). A specific example of such material may be the INZEA^{®} F15C thermoplastic material by Nurel Engineering Polymers, Nurel S.A. Zaragoza, Spain.

Figure 1 schematically shows a dispensing kit 1 according to a first exemplary embodiment.

According to this first embodiment, the support device 4 is made by a single cardboard strip. The cardboard strip is folded to form an enclosure with straight and curved walls. In particular, the support device 4 comprises a first wall 41 and a second wall 42 arranged in perpendicular planes attached to each other, and a third wall 44 which is curved and entirely surrounds the coil of filamentary product. The third wall 44, which is attached, at one end, to the second wall 42, is bent to surround the coil 2 so that, at the opposite end, the third wall 44 joins the second wall 42, after having completed a turn around the coil 2.

A compartment is formed between the third wall 44 and the corner 43 formed by the first wall 41 and the second wall 42. The compartment houses the connector assembly 3.

The support device 4 comprises an opening which is formed by aligning corresponding openings in both the first wall 41 and the third wall 44 at the location (position A in Figure 1) in which they possibly are side by side along the length of the third wall 44. The opening is configured to pass the payout tube 5 through it.

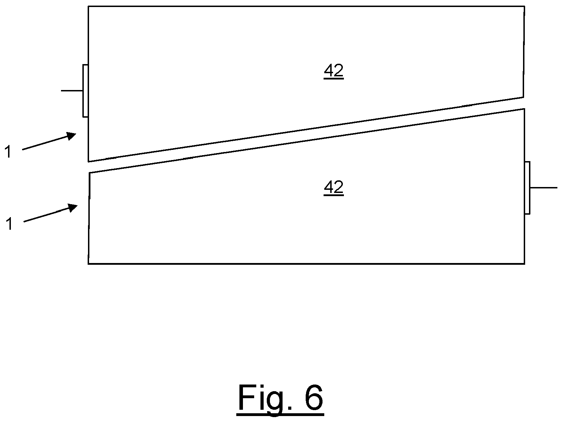

According to this embodiment, the width of the cardboard strip of the support device 4 may be constant along the length of the strip, or it may vary. In particular, according to an advantageous variant, the width of the cardboard strip may range from a maximum value at a position substantially corresponding to the position of the opening (position A in Figure 1) and a minimum value at an opposite position (position B in Figure 1). The maximum value of the width may range between 60 mm and 120 mm, while the minimum value of the width may range between 30 mm and 100 mm. Advantageously, this configuration allows stacking two dispensing kits with reduced size. Indeed, as schematically shown in Figure 6, the two dispensing kits may be piled so that the dispensing kit above has its shorter side in correspondence of the taller side of the dispensing kit below. Therefore, the total height of the two dispensing kits when stacked together is nearly equal to the sum of the maximum and minimum values of the width of the cardboard strip used in each dispensing kit.

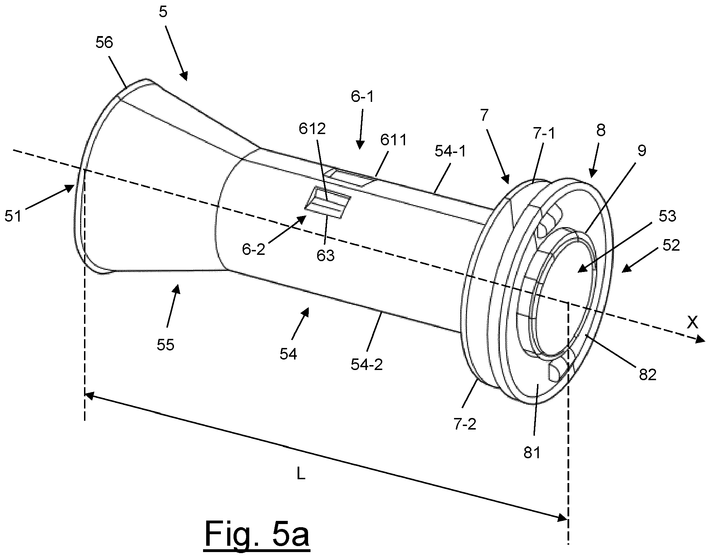

Figure 5a shows a payout tube 5 comprising two detachable longitudinally extending half portions, according to an embodiment of the present invention. Figure 5a also shows a longitudinal axis X.

The payout tube 5 of Figure 5a has an entrance end 51, an exit end 52, and a central passage 53 for the cable. At the entrance end 51, a back opening of the central passage is located. Similarly, at the exit end, a front opening of the central passage is located. The payout tube 5 has a length L which is comprised between 60 mm and 200 mm. For instance the length L of the payout tube may be 90 mm.

The payout tube 5 of Figure 5a comprises a tubular sleeve 54 and a truncated hollow cone 55. It is to be noticed that the structure of the payout tube of Figure 5a is merely an example. Indeed, for instance, the presence of the truncated hollow cone is optional. However, in the following description, reference will be made to the payout tube of Figure 5a for sake of example.

The tubular sleeve 54 has a first end corresponding to the exit end 52 of the payout tube 5 and a second end at which the tubular sleeve 54 is connected to the truncated cone 55. The truncated cone 55 has a first end at which it is connected to the tubular sleeve 54 and a second end corresponding to the entrance end 51 of the payout tube 5. At its first end, the diameter of the truncated cone 55 is substantially equal to the diameter of the tubular sleeve 54, while it increases towards the second end, which hence corresponds to the base of the truncated cone. The diameter of the central passage 53 at the tubular sleeve 54 is comprised between 15 mm and 30 mm, for instance it may be equal to 25 mm. The diameter of the central passage 53 at the base of the truncated cone 55 is comprised between 30 mm and 60 mm for instance it may be equal to 50 mm.

At the entrance end 51, the circumferential edge of the base of the truncated cone 55 may comprise a lip 56. The cross-section of the lip 56 has a radius which is slightly higher than a minimum bending radius of the cable, to avoid any kink in the cable.

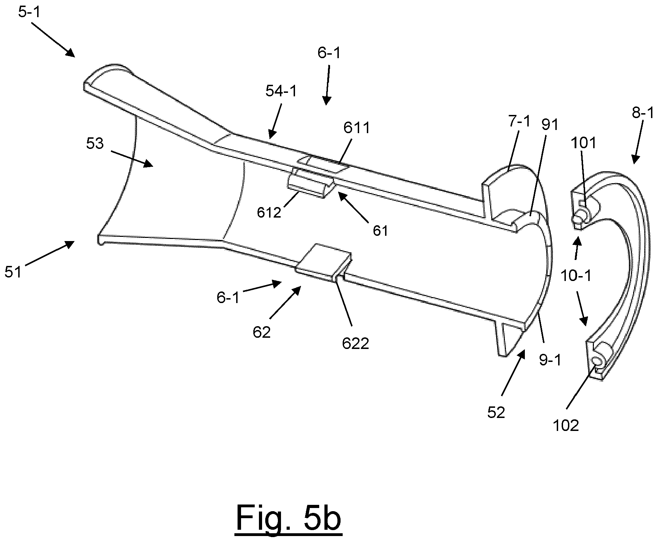

Figure 5b shows a detachable longitudinally extending portion 5-1 of the payout tube 5 of Figure 5a.

Each portion of the payout tube 5 comprises a portion of the tubular sleeve 54 and a portion of the truncated cone 55. In particular, for the exemplary payout tube shown in Figures 5a and 5b, each half portion of the payout tube 5 comprises a half portion of the tubular sleeve 54 and a half portion of the optional truncated cone 55.

Each portion of the tubular sleeve 54 may comprise coupling means for attaching the two half portions of the payout tube 5 together. The coupling means may be located at a substantially intermediate position between the exit end 51 and the entrance end 52 of the payout tube 5.

Figure 5b shows exemplary coupling means 6-1 of a first half portion 54-1 of the tubular sleeve. They are formed in the sidewall of the half portion 54-1 of the tubular sleeve along the edge thereof. They comprise two hooks 61, 62 located along a respective edge of the sidewall at diametrically opposed positions with respect to the longitudinal axis X. Each hook 61, 62 comprises a recess 611 formed in the sidewall of the half portion of the tubular sleeve. The recess 611 has a rectangular shape. Each hook 61, 62 further comprises a tooth 612, 622 located under the recess 611 inside the central passage 53.

The exemplary coupling means 6-2 of a second half portion 54-2 of the tubular sleeve are formed in the sidewall of the half portion of the tubular sleeve at corresponding positions with respect to the coupling means 6-1 of the first half portion 54-1 of the tubular sleeve. They comprise two recesses formed in the sidewall of the second half portion 54-2 of the tubular sleeve and located at diametrically opposed positions with respect to the longitudinal axis X.

The tooth 612, 622 of each hook 61, 62 in the first half portion 54-1 of the tubular sleeve is configured to engage an edge of a corresponding recess in the second half portion 54-2 of the tubular sleeve when the payout tube 5 is assembled, as shown in Figure 5a. In particular, Figure 5a shows tooth 612 engaging an edge of recess 63 in in the second half portion 54-2 of the tubular sleeve.

In a position near the exit end 52 of the payout tube (in particular, at a distance form the exit end 52 substantially corresponding to the thickness of the cardboard strip of the support device 4), the payout tube 5 comprises a stop lug 7, In particular, according to the embodiment shown in Figure 5a, each half portion 54-1, 54-2 of the tubular sleeve may comprise a respective half portion 7-1, 7-2 of the stop lug in the form of an annular segment projecting radially for a few millimeters (such as in the range from 5 mm to 20 mm) outwardly from the outer surface of the tubular sleeve 54. The angular extent of each portion 7-1, 7-2 of the stop lug shown in Figures 5a and 5b is substantially 180° as each portion 7-1, 7-2 of the stop lug circumferentially surrounds the respective half portion 54-1, 54-2 of the tubular sleeve. The stop lug 7 has an outer surface configured to bear against the inner surface of the support device 4 when the payout tube 5 is assembled in position within the opening in the support device. In particular, the outer surface of the stop lug 7 bears against the inner surface of the support device 4 around the boundary of the opening.

The payout tube 5 may further comprise a fixing ring 8. The fixing ring 8 is separable from the tubular sleeve 54 and configured to be fitted on the tubular sleeve 54 at the exit end 52 of the payout tube. The fixing ring 8 is configured to be fitted on the tubular sleeve 54 at the exit end 52 of the payout tube 5 so that when the payout tube 5 is positioned through the opening, the portion of the first wall 41 of the support device 4 around the opening may be gripped between the stop lug 7 and the fixing ring 8 and the payout tube 5 is secured in position in the opening.

The fixing ring 8 has a flat annular base 81 and an outer projecting edge 82, at the outer boundary of the annular base. The outer diameter of the fixing ring may correspond to the maximum radial extent of the stop lug 7.

The fixing ring 8 may be made by a material such as cardboard, thermoformed PLA (Polylactic Acid), molded fiber, injection molded biopolymer, or the like.

The fixing ring 8 as shown in Figures 5a and 5b comprises two half portions 8-1, 8-2 configured to be fitted on the two half portions 54-1, 54-2 of the tubular sleeve, as it will be described herein after.

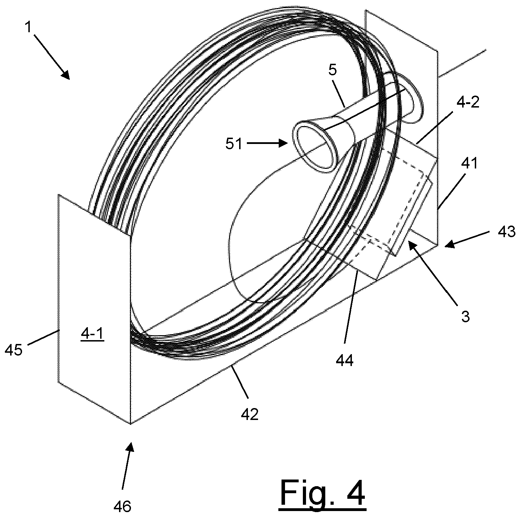

At the exit end 52, each half portion 54-1, 54-2 of the tubular sleeve 54 comprises a respective half portion of an annular relief 9. Figure 4 schematically shows a first portion 9-1 of the annular relief. The annular relief 9 is configured to block the fixing ring 8 onto the tubular sleeve 54. The annular relief 9 may be subdivided into sectors 91 for increasing flexibility. In particular, as shown in Figure 5a, when the fixing ring 8 is pushed onto the tubular sleeve 54, the sectors 91 slightly flex inwardly to allow the fixing ring 8 to pass. The annular relief 9 then keeps the fixing ring 8 in position on the tubular sleeve 54 as it blocks any sliding movement of the fixing ring 8 away from the tubular sleeve 54.

Figure 5b schematically shows a first half portion 8-1 of the fixing ring. It may comprise, at diametrically opposite positions, engagement means 10-1 to fix the two half portions 8-1, 8-2 of the fixing ring together. The engagement means 10-1 are positioned at the edges of the first half portion 8-1 of the fixing ring. The engagement means on the first half portion 8-1 of the fixing ring comprise a male fastener 101 and a female fastener 102, which are located at opposite positions on the edge of the first half-portion 8-1 with respect to the longitudinal axis X. The male fastener 101 on the first half portion 8-1 of the fixing ring is configured to engage a female fastener similar to female fastener 102 shown in Figure 5b on the second half portion 8-2 of the fixing ring, and vice versa the female fastener 102 on the first half portion 8-1 of the fixing ring is configured to engage a male fastener similar to male fastener 101 shown in Figure 5b on the second half portion 8-2 of the fixing ring. The male fastener on each half portion 8-1, 8-2 of the fixing ring comprises a pin while the female fastener comprises a corresponding hole configured to receive the pin.

The manner in which the payout tube 5 of Figures 5a and 5b is secured to the support device 4 will be described in the following lines. Firstly, the two half portions 5-1, 5-2 of the payout tube are attached together by means of the coupling means 6-1, 6-2. Then, the payout tube 5 is axially aligned with the opening in the first wall 41 of the support device and advanced towards the support device's first wall 41 to pass the end portion of the tubular sleeve (namely, the portion of the tubular sleeve comprised between the stop lug 7 and the exit end 52) though the opening. The payout tube 5 is stopped when the stop lug 7 comes into contact with the inner surface of the portion of the first wall 41 of the support device located around the opening. The end portion of the tubular sleeve 54 then projects from the outer surface of the first wall 41 of the support device towards the exterior of the support device 4. At this point, the fixing ring 8 is assembled by attaching the two half portions 8-1, 8-2 together. This is done by means of the engagement means of the fixing ring, in particular by engaging the male and female fasteners 101, 102 on the first half portion 8-1 with, respectively, the female and male fasteners on the second half portion 8-2. Once the fixing ring 8 is assembled, it is fitted onto the end portion of the tubular sleeve 54 as described above, so that the portion of the first wall 41 of the support device located around the opening is firmly sandwiched between the stop lug 7 and the fixing ring 8 and the payout tube 5 is held in position through the opening.

According to alternative embodiments of the payout tube of the present invention (not shown in the drawings), the payout tube is made of a single piece of material and comprises at least one longitudinally extending weakened line for cutting or tearing the payout tube and folding it open. The weakened line may be a straight line longitudinally extending over the whole length of the payout tube, so that when the line is cut the payout tube may be folded open and release the length of the cable housed therein. Alternatively, the payout tube may comprise two opposite weakened lines which allow to split the payout tube in two parts. Further alternatively, the weakened line may be a curved line helically extending along the whole length of the payout tube.

The shape of the payout tube according to these alternative embodiments of the invention may be the same as already described above with reference to Figure 5a, namely the payout tube may comprise a tubular sleeve connected to a truncated cone at the entrance end.

According to these alternative embodiments, in a position near the exit end of the payout tube the payout tube comprises a stop lug in the form of an annular segment projecting radially for a few millimeters (such as in the range from 5 mm to 20 mm) outwardly from the outer surface of the tubular sleeve and with an angular extent of substantially 360° as it circumferentially surrounds the tubular sleeve. It is to be noticed that, according to these second embodiments, the weakened line also crosses the stop lug. Moreover, the payout tube comprises a fixing ring (possibly provided as a single piece of material) and an annular relief similar to, respectively, the fixing ring and the annular relief already described above with reference to Figures 5a and 5b. The fixing ring may be provided with one or more weakened lines allowing to cut or tear it when the payout tube is to be disassembled to release the length of the cable housed therein and the connector assembly. The manner in which the payout tube of these alternative embodiments is secured to the support device is hence the same as already described above with reference to the payout tube of Figures 5a and 5.

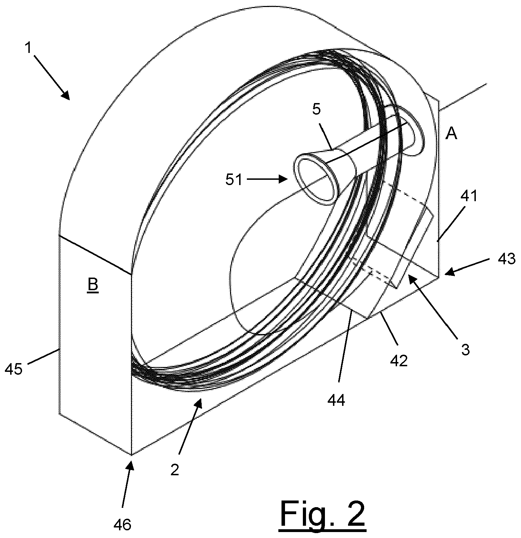

Figure 2 schematically shows a dispensing kit 1 according to a second exemplary embodiment.

According to this embodiment, the support device 4 is made by a single cardboard strip. The cardboard strip is folded to form an enclosure with straight and curved walls. In particular, the support device 4 comprises a first wall 41, a second wall 42 and a third wall 45 arranged two by two in perpendicular planes and attached to each other, forming a first corner 43 and a second corner 46. It is to be noticed that when at least two adjacent corners are formed, as in this case, the dispensing kit may advantageously be held in a vertical position laying on the support device's wall (in this case, the second wall 42) comprised between the two corners.

The support device further comprises a fourth wall 44 attached to the third wall 45, the fourth wall 44 being curved. The fourth wall 44 surrounds a portion of the coil 2 of filamentary product. In particular, the fourth wall 44 is bent to surround the coil 2 so that, at an opposite end with respect to the end that is attached to the third wall 45, the fourth wall 45 joins the first wall 41 (position A in Figure 2). In this way, the support device 4 completely surrounds the coil 2.

A compartment is formed between the fourth wall 44 and the corner 43 formed by the first and second walls 41, 42. The compartment houses the connector assembly 3.

The support device 4 of Figure 2 comprises an opening (not shown in the drawings) which is formed by aligning corresponding openings in both the first wall 41 and the fourth wall 44 at the location (position A in Figure 2) in which they are side by side along the length of the fourth wall 44. The opening is configured to pass a payout tube 5 through it. The payout tube 5 may be the payout tube already described above with reference to Figures 5a and 5b, or alternatively the payout tube made by a single piece of material with one or more weakened lines as mentioned above.

According to this embodiment, the width of the cardboard strip may be constant along the length of the strip, or it may vary. In particular, according to an advantageous variant, the width of the cardboard strip may range from a maximum value at a position substantially corresponding to the position of the opening (position A in Figure 1) and a minimum value at an opposite position (position B in Figure 1). The maximum value of the width may range between 60 mm and 120 mm, while the minimum value of the width may range between 30 mm and 100 mm. As already discussed above and schematically shown in Figure 6, advantageously, this configuration allows stacking two dispensing kits with reduced size. Indeed, the two dispensing kits may be piled so that the dispensing kit above has its shorter side in correspondence of the taller side of the dispensing kit below. Therefore, the total height of the two dispensing kits when stacked together is nearly equal to the sum of the maximum and minimum values of the height of the cardboard strip used in each dispensing kit.

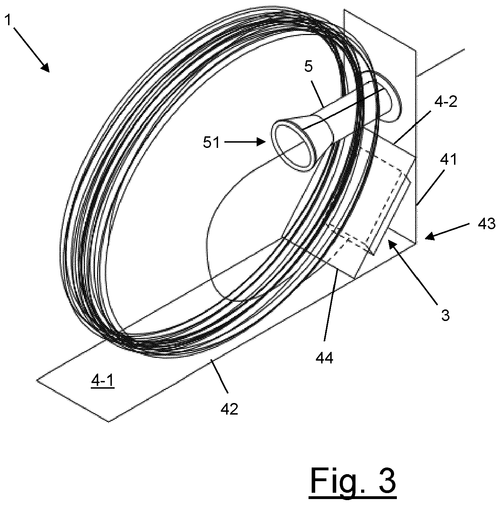

Figure 3 schematically shows a dispensing kit 1 according to a third exemplary embodiment of the present invention.

According to this embodiment, the support device 4 is made by two cardboard strips. A first cardboard strip 4-1 is folded to form two straight walls. In particular, the first cardboard strip 4-1 comprises a first wall 41 and a second wall 42 arranged in perpendicular planes. A second cardboard strip 4-2 is preferably positioned at the corner 43 formed by the first wall 41 and the second wall 42 and is attached, at a respective end thereof, to each one of the first and second walls 41, 42. In other words, the second cardboard strip forms a third wall 44 that is placed at the corner 43 between the first wall 41 and the second wall 42 in an inclined position. In this way, a compartment is formed between the third wall 44 and the corner 43, in which the connector assembly is housed.

The support device 4 comprises an opening (not shown in the drawings) which is formed in the first wall 41. The opening is configured to pass a payout tube 5 through it. The payout tube 5 may be the payout tube already described above with reference to Figures 5a and 5b, or alternatively the payout tube made by a single piece of material with one or more weakened lines as mentioned above.

Figure 4 schematically shows a dispensing kit 1 according to a fourth embodiment of the present invention.

According to this embodiment, the support device 4 is made by two cardboard strips. A first cardboard strip 4-1 is folded to form three adjacent straight walls. In particular, the first cardboard strip 4-1 comprises a first wall 41, a second wall 42 and a third wall 45 arranged two by two in perpendicular planes and forming two corners 43, 46. A second cardboard strip 4-2 is preferably positioned at the corner 43 formed by the first wall 41 and the second wall 42 and is attached, at a respective end thereof, to each one of the first and second walls 41, 42. In other words, the second cardboard strip forms a fourth wall 44 placed at the corner 43 between the first wall 41 and the second wall 42 in an inclined position. In this way, a compartment is formed between the fourth wall 44 and the corner 43, in which the connector assembly 3 is housed.

Alternatively, the second cardboard strip 4-2 may be positioned at the corner 46 formed by the second wall 42 and the third wall 45 and is attached, at a respective end thereof, to each one of the second and third walls 42, 45. In other words, the second cardboard strip forms a fourth wall 44 that may be placed at the corner 46 between the second wall 42 and third wall 45 in an inclined position. In this way, a further, or alternative, compartment may be formed between the fourth wall 44 and the corner 46, in which the connector assembly 3 or further accessories may be housed.

It is to be noticed that also in this case, the dispensing kit 1 comprises a support device 4 having two corners, which may advantageously be held in a vertical position laying on the support device's wall (in this case, the second wall) comprised between the two corners.

According to this embodiment, the width of the first cardboard strip may be constant along the length of the strip, or it may vary. In particular, according to an advantageous variant, the width of the first cardboard strip may range from a maximum value at a position substantially corresponding to the position of the opening (position A in Figure 1) and a minimum value at an opposite position (position B in Figure 1) with respect to a center of the coil of the filamentary product. As already discussed above and schematically shown in Figure 6, advantageously, this configuration allows stacking two dispensing kits with reduced size. Indeed, the two dispensing kits may be piled so that the dispensing kit above has its shorter side in correspondence of the taller side of the dispensing kit below. Therefore, the total height of the two dispensing kits when stacked together is nearly equal to the sum of the maximum and minimum values of the height of the cardboard strip used in each dispensing kit.

The support device 4 comprises an opening (not shown in the drawings), which is formed in the first wall 41. The opening is configured to pass a payout tube 5 through it. The payout tube 5 may be the payout tube already described above with reference to Figures 5a and 5b, or alternatively the payout tube made by a single piece of material with one or more weakened lines as mentioned above.

In the following line, the process for assembling and using the dispensing kit 1 according to all the embodiments of the present invention will be described. Reference will be made, for sake of example, to a dispensing kit for a fiber optic cable.

According to the exemplary embodiments schematically shown in Figures 1-4, a length of a fiber optic cable is looped in a figure-eight arrangement. The length of the optic fiber cable comprises, at a first end, the connector assembly 3, and optionally, at a second end, a conventional pulling or pushing system used for dispensing the cable (not shown in the drawings). The support device 4 is then arranged to surround, or partly surround, the coil 2 of the fiber optic cable and the connector assembly 3, according to any one of the configurations shown in Figures 1-4. The connector assembly 3 is preferably placed outside the coil 2, in the compartment described above.

In the meantime, the payout tube 5 is secured to the support device 4. The second end of the coiled cable 2 is positioned inside the payout tube 5 and made to pass through it so as to exit the support device 4.

At this point, the support device 4, with the coil 2 of fiber optic cable and the connector assembly 3, and the payout tube 5 are preferably covered by using, e.g., the thermo-plastic film cited above.

When the cable is to be dispensed, the covering is removed at the location of the opening in the support device 4 and the second end of the cable can be pulled or pushed using, for instance, the conventional pulling or pushing system mentioned above. Then the fiber optic cable is unwound as it is pulled out of the support device 4 through the exit end of the payout tube 5. When the cable is almost entirely pulled out from the support device 4, the support device 4 is cut and the payout tube 5 is folded open to free the connector assembly 3 at the first end of the cable.

Advantageously, the dispensing kit described herein above allows to store and dispense a coil of a filamentary product having a connector assembly attached at an end thereof while reducing the amount of waste materials to be disposed after installation of the coiled product. Indeed, the volume of the dispensing kit is advantageously reduced with respect to the prior art boxes. This also allows to also reduce costs. Moreover, advantageously, the dispensing kit is made of biodegradable materials meeting the European Standard EN 13432:2000.

## Claims

1. A coiled product dispensing kit (1) comprising:
- a coil (2) of a filamentary product;
- a support device (4) for said coil (2);
- a payout tube (5) configured to pass a length of said filamentary product through it, the payout tube (5) extending through an opening formed in said support device (4) and having an entrance end (51) for said filamentary product inside an area surrounded by said coil (2),
**characterized in that** said coiled product dispensing kit (1) further comprises a connector assembly (3) attached to an end of said filamentary product and the support device (2) comprises:
- a first wall (41; 45) and a second wall (42) arranged in perpendicular planes and attached to each other to form a corner (43; 46);
- a compartment formed between said corner (43; 46) and a further wall (44) attached to both the first wall (41; 45) and the second wall (42), the compartment being configured to house said connector assembly (3).

2. The coiled product dispensing kit (1) according to claim 1, wherein said support device (4) comprises one or more cardboard strips.

3. The coiled product dispensing kit (1) according to claim 2, wherein said support device (4) is made by a single cardboard strip.

4. The coiled product dispensing kit (1) according to claim 2, wherein said support device (4) comprises a cardboard strip (4-1) folded to form said first wall (41; 45) and said second wall (42), and a further cardboard strip (4-2) forming said further wall (44) that is placed at said corner (43) between said first wall (41; 45) and said second wall (42) in an inclined position.

5. The coiled product dispensing kit (1) according to any of claims 2 to 4, wherein said support device (4) comprises a cardboard strip folded to form three adjacent straight walls (41, 42, 45) arranged on perpendicular planes and two corners (43, 46) between said straight walls.

6. The coiled product dispensing kit (1) according to any of the preceding claims, further comprising a heat-shrinkable thermo-plastic film covering said support device (4) supporting the coil (2) and the connector assembly (3), and the payout tube (5).

7. The coiled product dispensing kit (1) according to claim 6, wherein said heat-shrinkable thermo-plastic film is made by a biopolymer or another biodegradable material.

8. The coiled product dispensing kit (1) according to any of the preceding claims, wherein said payout tube (5) is configured to be folded open lengthwise to release said length of said filamentary product.

9. The coiled product dispensing kit (1) according to any of the preceding claims, wherein said payout tube (5) is a single piece of material comprising a weakened line along the length of the payout tube.

10. The coiled product dispensing kit (1) according to any of the preceding claims, wherein said payout tube (5) is made of one of the following materials: cardboard, thermoformed polylactic acid, molded fiber, injection molded biopolymer.

## Patentansprüche

1. Eine Ausgabevorrichtung (1) für ein Spulenprodukt umfassend:
- eine Spule (2) aus einem fadenförmigen Produkt;
- eine Haltevorrichtung (4) für die Spule (2);
- ein Ausgaberohr (5), das so konfiguriert ist, dass das fadenförmige Produkt in seiner Länge hindurchführbar ist, wobei sich das Ausgaberohr (5) durch eine in der Haltevorrichtung (4) ausgebildete Öffnung erstreckt und ein Eingangsende (51) für das fadenförmige Produkt innerhalb eines von der Spule (2) umgebenen Bereichs aufweist,
**dadurch gekennzeichnet, dass** die Ausgabevorrichtung (1) für das Spulenprodukt ferner eine Verbindungsanordnung (3) umfasst, die an einem Ende des fadenförmigen Produkts angebracht ist, und die Haltevorrichtung (2) umfasst:
- eine erste Wand (41; 45) und eine zweite Wand (42), die in senkrechten Ebenen angeordnet und aneinander befestigt sind, um eine Ecke (43; 46) zu bilden;
- einen Raum, der zwischen der Ecke (43; 46) und einer weiteren Wand (44) gebildet ist, die sowohl an der ersten Wand (41; 45) als auch an der zweiten Wand (42) befestigt ist, wobei der Raum so konfiguriert ist, dass er die Verbindungsanordnung (3) aufnimmt.

2. Die Ausgabevorrichtung (1) für ein Spulenprodukt nach Anspruch 1, wobei die Haltevorrichtung (4) einen oder mehrere Kartonstreifen umfasst.

3. Die Ausgabevorrichtung (1) für ein Spulenprodukt nach Anspruch 2, wobei die Stützvorrichtung (4) aus einem einzigen Kartonstreifen besteht.

4. Die Ausgabevorrichtung (1) für ein Spulenprodukt nach Anspruch 2, wobei die Haltevorrichtung (4) einen Pappstreifen (4-1) umfasst, der so gefaltet ist, dass er die erste Wand (41; 45) und die zweite Wand (42) bildet, sowie einen weiteren Pappstreifen (4-2), der die weitere Wand (44) bildet und an der Ecke (43) zwischen der ersten Wand (41; 45) und der zweiten Wand (42) in einer geneigten Position angeordnet ist.

5. Die Ausgabevorrichtung (1) für ein Spulenprodukt nach einem der Ansprüche 2 bis 4, wobei die Haltevorrichtung (4) einen Kartonstreifen umfasst, der so gefaltet ist, dass er drei benachbarte gerade Wände (41, 42, 45), die in senkrechten Ebenen angeordnet sind, und zwei Ecken (43, 46) zwischen den geraden Wänden bildet.

6. Die Ausgabevorrichtung (1) für ein Spulenprodukt nach einem der vorangehenden Ansprüche umfasst ferner eine wärmeschrumpfbare thermoplastische Folie, die die Haltevorrichtung (4), die Spule (2) und die Verbindungsanordnung (3) hält und den Ausgabeschlauch (5) abdeckt.

7. Die Ausgabevorrichtung (1) für ein Spulenprodukt nach Anspruch 6, wobei die wärmeschrumpfbare thermoplastische Folie aus einem Biopolymer oder einem anderen biologisch abbaubaren Material besteht.

8. Die Ausgabevorrichtung (1) für ein Spulenprodukt nach einem der vorhergehenden Ansprüche, wobei der Ausgabeschlauch (5) so konfiguriert ist, dass er in Längsrichtung aufgefaltet werden kann, um die Länge des fadenförmigen Produkts freizugeben.

9. Die Ausgabevorrichtung (1) für ein Spulenprodukt nach einem der vorangehenden Ansprüche, wobei der Ausgabeschlauch (5) ein einzelnes Materialstück ist, das eine geschwächte Linie entlang der Länge des Ausgabeschlauchs aufweist.

10. Die Ausgabevorrichtung (1) für ein Spulenprodukt nach einem der vorhergehenden Ansprüche, wobei der Ausgabeschlauch (5) aus einem der folgenden Materialien hergestellt ist: Pappe, thermogeformte Polymilchsäure, geformte Faser oder spritzgegossenes Biopolymer.

## Revendications

1. Kit de distribution de produit enroulé (1) comprenant :
- une bobine (2) d'un produit filamenteux ;
- un dispositif de support (4) pour ladite bobine (2) ;
- un tube de versement (5) configuré pour laisser passer une longueur dudit produit filamenteux à travers lui, le tube de versement (5) s'étendant à travers une ouverture formée dans ledit dispositif de support (4) et ayant une extrémité d'entrée (51) pour ledit produit filamenteux à l'intérieur d'une zone entourée par ladite bobine (2),
**caractérisé en ce que** ledit kit de distribution de produit enroulé (1) comprend en outre un ensemble connecteur (3) fixé à une extrémité dudit produit filamenteux et le dispositif de support (2) comprend :
- une première paroi (41 ; 45) et une deuxième paroi (42) agencées dans des plans perpendiculaires et fixées l'une à l'autre pour former un coin (43 ; 46) ;
- un compartiment formé entre ledit coin (43 ; 46) et une paroi supplémentaire (44) fixée à la fois à la première paroi (41 ; 45) et à la deuxième paroi (42), le compartiment étant configuré pour contenir ledit ensemble connecteur (3).

2. Kit de distribution de produit enroulé (1) selon la revendication 1, dans lequel ledit dispositif de support (4) comprend une ou plusieurs bandes de carton.

3. Kit de distribution de produit enroulé (1) selon la revendication 2, dans lequel ledit dispositif de support (4) est fait d'une seule bande de carton.

4. Kit de distribution de produit enroulé (1) selon la revendication 2, dans lequel ledit dispositif de support (4) comprend une bande de carton (4-1) pliée pour former ladite première paroi (41 ; 45) et ladite deuxième paroi (42), et une bande de carton supplémentaire (4-2) formant ladite paroi supplémentaire (44) qui est placée au niveau dudit coin (43) entre ladite première paroi (41 ; 45) et ladite deuxième paroi (42) dans une position inclinée.

5. Kit de distribution de produit enroulé (1) selon l'une quelconque des revendications 2 à 4, dans lequel ledit dispositif de support (4) comprend une bande de carton pliée pour former trois parois (41, 42, 45) droites adjacentes agencées sur des plans perpendiculaires et deux coins (43, 46) entre lesdites parois droites.

6. Kit de distribution de produit enroulé (1) selon l'une quelconque des revendications précédentes, comprenant en outre un film thermoplastique thermorétractable couvrant ledit dispositif de support (4) supportant la bobine (2) et l'ensemble connecteur (3), et le tube de versement (5).

7. Kit de distribution de produit enroulé (1) selon la revendication 6, dans lequel ledit film thermoplastique thermorétractable est fait d'un biopolymère ou d'un autre matériau biodégradable.

8. Kit de distribution de produit enroulé (1) selon l'une quelconque des revendications précédentes, dans lequel ledit tube de versement (5) est configuré pour être plié ouvert dans le sens de la longueur pour libérer ladite longueur dudit produit filamenteux.

9. Kit de distribution de produit enroulé (1) selon l'une quelconque des revendications précédentes, dans lequel ledit tube de versement (5) est une seule pièce de matériau comprenant une ligne affaiblie le long de la longueur du tube de versement.

10. Kit de distribution de produit enroulé (1) selon l'une quelconque des revendications précédentes, dans lequel ledit tube de versement (5) est fait d'un des matériaux suivants : du carton, de l'acide polylactique thermoformé, une fibre moulée, un biopolymère moulé par injection.
